# EUROPEAN PATENT APPLICATION

(11) **EP 1 777 961 A1**
(43) Date of publication of application: **25.04.2007**
(21) Application number: 05292199.6
(22) Date of filing: 19.10.2005
(51) Int. Cl.: H04N 7/24

(54) **Configuration tool for a content and distribution management system**

(71) Applicant: Alcatel Lucent, 75008 Paris (FR)
(72) Inventor: Robinson, David Cecil, Aldbourne Wiltshire SN8 2NP (GB); Robbertze, Max Francois, Caversham Reading RG4 8AL (GB); McEvilly, Chris, Bagshot Surrey GU19 5QF (GB)
(74) Representative: Narmon, Gisèle Marie Thérèse

(57) **Abstract**

A configuration tool for a content and distribution management system for assets (111, 112), comprising:
a. an editor (101) for editing templates defining metadata (161, 162, 163; 171, 172, 173) of an asset (111; 112) through key/value pairs and lists of values;
b. a plurality of agents (121, 122, 123, 12N), each having headend device specific logic for transforming an internal asset format into a headend device specific asset format;
c. an extensible representation of metadata, e.g. XML, for uninterpreted transport of device specific assets to the appropriate agent (121; 122; 123; 12N); and
d. a configurable workflow (151) for defining the order and dependencies between elements of events handling the assets (111; 112) and/or metadata (161, 162, 163; 171, 172, 173).

## Description

### Field of the Invention

The present invention generally relates to configuration of content and distribution management systems, like for instance a video/television content and distribution management system for IPTV (Internet Protocol TV). Such configuration tools all provide similar functionality: the ability to define metadata (metadata are data about assets, like for instance the title, actors, director, rating, category,... of a TV programme), the ability to manage assets (assets are for instance the MPEG2 files containing the TV or video programmes, games, ringtones, secondary assets accompanying the main asset such as for example icon images, or even configuration information like channel definitions, purchase policies, network configuration information, video server configuration information), and the ability to associate metadata with assets before publishing events for handling the assets and/or metadata.

Content and distribution management systems in the context of this patent application may be more generic then IPTV content and distribution managers, considering for instance on other areas like website management and the like.

### Background of the Invention

There are currently several solutions for IPTV content and distribution management, including the Lysis iDTV software, and Seachange's Content Pipeline Solution.

The Lysis iDTV software for instance collects, stores, schedules, validates, synchronizes and pilots programming data through different digital TV platforms leading to various IPTV services like pay-TV, pay-per-view (PPV), video-on-demand (VOD), near-video-on-demand (NVOD), etc. Its operating platform manages all persistent data and provides tools to configure the entire system. This entails the management of a program inventory with metadata, management of the assets, presence of agents to communicate with external systems such as TV listing agencies, video servers, application servers, etc., and the use of workflows broken down in well-defined tasks or events. More details on Lysis IDTV software and its configurability can be found on the Internet at URL: http://www.lysis.com/pdf/Lysis_iDTV.pdf

Seachange's Content Pipeline contains asset management, propagation and archiving software to deliver assets like media files in audio, video, graphical or compressed formats over data networks. As an example, the content preparation utilities in the system are controlled or configured to produce MPEG2 content and its associated XML metadata to be stored in the so called MediaLibrary. Transcoding suites are foreseen to analyze the content and metadata and to transcode the content or modify the metadata according to ingest rules configured for a specific application. The content management and propagation software can be customized to support a variety of applications through well defined programming interfaces and accessibility algorithms. To support the unique application needs, Seachange's customers have to rely on Seachange's product specialists and subject matter experts. SeaChange's Content Pipeline solution as well as the professional configuration service and support offered by Seachange are advertised and described in the brochure that can be downloaded via the Internet URL:
http://www.schange.com/Downloads/MXT/SCcontent.pdf

The main problem which the current invention seeks to resolve is the rigidity in the data models and associated device configurations that result in expensive customizations per deployment when using known prior art systems like the above described platforms from SeaChange and Lysis.

Indeed, each deployment of an IPTV system has different requirements. One way this is manifested is in the different metadata. Usually, a wide range of metadata is supported and then customized per deployment where different metadata items are required. The customization requires adaptations to the core software.

The result is that existing content and distribution management systems require extensive tailoring of the product to meet specific deployment requirements. Such tailoring is complex and therefore can only be done by expensive consultants or specialist. Lysis' iDTV software for instance allows some changes to the downstream system, but significant professional interventions are required to integrate the inflexible graphical user interface (GUI) of this system. Other known prior art systems allow for flexibility in their data or metadata definitions but do not address the marketing of content nor integration into physical devices.

It is an object of the current invention to enable clients (e.g. operators buying a content and distribution management system) or even field engineers to configure the content and distribution management platform to meet certain deployment specifics.

### Summary of the Invention

The above defined object is achieved through a combination of four elements as expressed by claim 1:
a. an editor for editing user-editable templates defining metadata of an asset used in the content and distribution management system through key/value pairs and lists of values;
b. a plurality of agents, each agent having headend device specific logic for transforming an internal asset format used in the content and distribution management system into a headend device specific asset format;
c. an extensible representation of metadata for uninterpreted transport of device specific assets to the appropriate agent; and
d. a configurable workflow for defining the order and dependencies between elements of events handling said assets and/or metadata.

Indeed, thanks to the combination of these four elements, the required configuration flexibility is obtained. The flexibility comes firstly from the ability to define a set of key/value pairs on a template and the configuration tool according to the present invention thereto provides the editor. A second area of flexibility is with the agents that enable deployment against different downstream devices, for instance against different IPTV applications, video servers and encryption devices. The agents provide the mapping between the common intemals of the content and distribution management system and! the specific downstream devices, and support a common interface defining a set of commands to be applied to the downstream devices. The third area of flexibility is using an extensible representation of the metadata exchanged between the content management and distribution management part of the system. When an item is published in the content manager, the publishers use the metadata template definitions to generate the extensible representation. There is no need for the publishers to recode. The extensible metadata representation is passed uninterpreted to the relevant agent, again not requiring any coding changes to interfaces of internals of the distribution manager. Lastly, the fourth area of flexibility according to the present invention is in the configurable workflow. The workflow can be altered by changing the rules for ordering and by introducing new element types performing specific tasks such as loading metadata, unloading assets, encrypting assets, etc.

In an advantageous embodiment of the invention defined in claim 2, the editor comprises means to customize an existing template. Thus the editor according to the current invention might enable modifying an existing template.

In a further advantageous embodiment of the invention defined in claim 3, the editor comprises means to define a new template. Thus the editor according to the current invention might enable creating a new template.

Another advantageous feature of the configuration tool according to the present invention is, as defined in claim 4, that the editor comprises means to specify a key name and type for each entry in a template. This way, the content manager can be configured to support any metadata requirements for a specific deployment.

As further specified in claim 5, another advantageous feature of the configuration tool according to the invention is that the editor comprises means to specify a user-defined type for an entry in a template. Indeed, the type can be from both predefined types (for instance integer, string, URL) and custom defined types (for instance enumerated lists of values). The editor thus may allow the operator of the content and distribution management system to define specific ranges, default values and mandatory fields. Typically, the operator would do this to match the constraints of his application.

Another preferred feature of the current invention is that the agents support a number of commands for events handling the assets, as defined in claim 6. All agents may support for instance 7 commands: the initialise command, the input command, the load command, the update command, the unload command, the abort command and the tidy command. These commands will be further described in relation to a specific embodiment of the invention below in this patent application.

An optional feature of the present invention is that the extensible representation of metadata corresponds to XML, as defined by claim 7. Extensible Markup Language, abbreviated XML, describes a class of data objects called XML documents and partially describes the behaviour of computer programs which process them. XML 1.0 is a W3C Recommendation which can be retrieved at Internet URL:
hftp://www.w3.org/TR/1998/REC-xml-19980210

As defined by claim 8, a further feature of the invention is that the event elements correspond to specific tasks for handling an asset and/or its metadata. Examples are the loading of metadata, the unloading of an asset, the encryption of an asset.

Still an advantageous feature of the invention, defined in claim 9, is that the workflow defines load order and unload order of the elements and dependencies between the elements. This is important to ensure correct termination of an event.

Claim 10 further specifies that the workflow advantageously also defines error handling and reporting. This may include the ability to correct the workflow. The workflow will automatically recover from the failed point.

As expressed by claim 11, the workflow further may automatically correct expected errors. For example, should a failure occur in sending a media file to a media server, it will automatically retry the transfer before reporting the failure.

A specific implementation of the current invention is in a video content and distribution management system for VoD or NVoD assets, as defined by claim 12. In such implementation, the headend devices may correspond to application servers, video servers or transcoders as defined by claim 13. Other examples where the current invention would be useful are content and distribution management platforms for games, ringtones, time-shifted TV, PVR information, genres, categories, ... Thus, the invention is more widely applicable than just for VOD and NVOD. It can even be used to stage configuration information like channel definitions, purchase policies, network configuration information, video server configuration information, etc. The headend devices in such variant systems can be webservers, an IP-telephony type system, a component in a billing system in the a third party back office, a programmed robot, etc.

### Brief Description of the Drawings

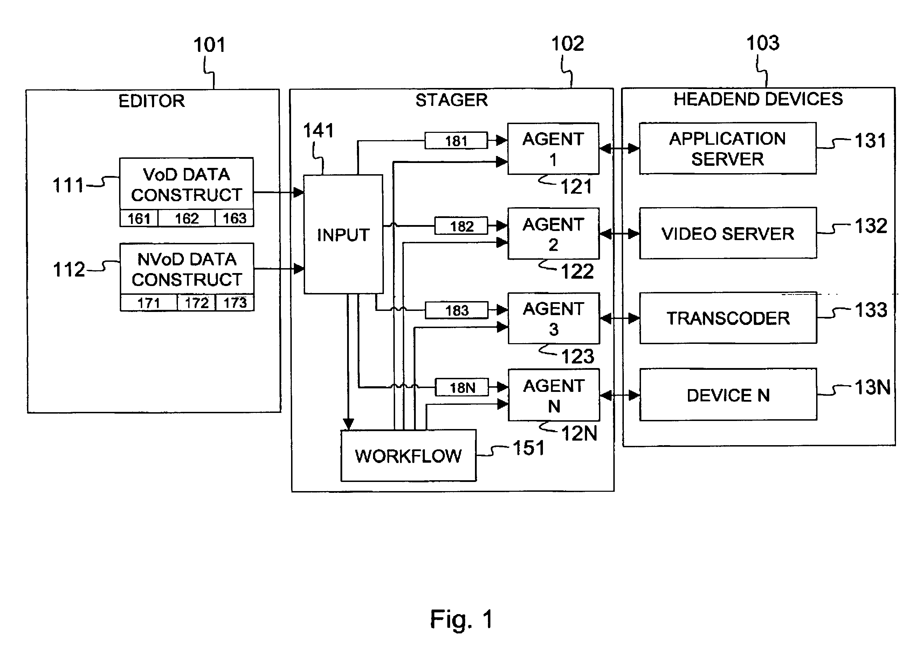

Fig. 1 illustrates an embodiment of a configurable content and distribution management system according to the present invention.

### Detailed Description of Embodiment(s)

Fig. 1 shows a television content and distribution management system whose configuration according to the current invention does not require any code changes to the core product. This management system and its flexible configuration reduces the operator's deployment cost for Video-on-Demand (VoD) and Near-Video-on-Demand (NVoD) services and minimizes the time to market of those services.

The flexible management model illustrated by Fig. 1 allows operators of IPTV and related media based services, including mobile TV services, to configure the system to enable management of a diverse set of IPTV delivery systems without having to modify the core content and distribution management system.

In particular, this management model and its flexible configuration enable operators to define assets like 111 and 112 and to publish them as either Video-on-Demand (111) or Near-Video-on-Demand (112) events, as well as for instance games and other media related events. To do so, the operator has to define the metadata 161, 162, 163 of VoD asset 111 and metadata 171, 172, 173 of NVoD asset 112. The metadata represent for instance the title, description, actors, ... in other words, the exact set of metadata used in a deployment or in the downstream headend devices 103. In Fig. 1 for instance, metadata 161, 162 and 163 are associated with VoD asset 111. Thereof, metadata 161 is intended for use in application servers like 131, metadata 162 is intended for use in video servers like 132, and metadata 163 is intended for use in transcoders like 133. Similarly, Fig. 1 shows metadata 171, 172 and 173 that are associated with NVoD asset 112. Thereof metadata 171 is intended for use in application servers like 131, metadata 172 is intended for use in video servers like 132, and metadata 173 is intended for use in transcoders like 133. Further, the distribution system or stager 102 in Fig. 1 even shows the flowing of metadata 181, 182, 183 and 18N. These metadata may be associated with another VoD asset, NVoD asset or even other assets like games, etc. not shown explicitly in Fig. 1. Metadata 181 is again intended for use by application servers like 131, metadata 182 is intended for use by video servers like 132, metadata 183 is intended for use by transcoders like 133, and metadata 18N is intended for yet another type of headend device referenced by 13N in Fig. 1.

It is noticed that the flexibility offered by the current invention is also applied to the configuration of other attributes of a VoD or NVoD asset including but not limited to rating, language, marketing category, packaging, selling policy, etc. This way, extensible management of metadata has become possible without requiring coding changes to the core content and distribution management system. Hence, the management system of Fig. 1 can !meet specific and changing requirements for a particular IPTV deployment. The! flexible configuration is applicable to all aspects of media related events handled in the system, including VoD, NVoD, games events, etc. The configuration can be performed by installation engineers without need for coding knowledge. The changes can thus be performed by the customers of the management system. The system can be used against different downstream devices, like for instance Alcatel's OMP 2.1.1, 5959CM and 5959DM as well as Microsoft's IPTV Edition, as well as management platforms for content for mobile based services.

With the system drawn in Fig. 1, field engineers are enabled to configure the product to meet deployment specifics. This is done through a combination of four techniques which are essential to the current invention.

Firstly, the editor 101 enables through its graphical user interface the customisation of the metadata model through selection of key/value pairs and lists of values.

In contrast to the classical content management solutions, the editor 101 supports changes to metadata using configurable templates and user definable List-Of-Values (LOVs). This means no coding changes to the GUI are necessary to meet requirements of different downstream headend devices. In addition, minimal coding changes in the agents 121, 122, 123 and 12N enable to support different downstream systems as will explained in more detail below. These small coding changes in the agents 121, 122, 123 and 12N can be done by field engineers and do not require significant training. The effect is to provide lower cost solution to the customer.

A template in the course of the current invention is a set of typed key/value pairs. The operator is prompted by editor 101 to enter specific key values. By clicking on an "Add" button in the graphical user interface of editor 101 for instance, the operator is prompted for a new key name, a base type for a value, constraints on the value (e.g. the length of a string), a default value if any, and a mandatory field.

The flexibility comes from the ability to define the set of key/values on a template using editor 101. The editor 101 enables to customize an existing template as well as to define new templates. It also enables creating hidden values (i.e. permanently hidden from the operator) as well as specifying the order and range of values. This way, the content manager can be configured to support any metadata requirements for a specific deployment.

Each entry in a template consists of a key name and a type. The type can be predefined (e.g. an integer, a string, a URL) or custom-defined (such as an enumerated list of values). The editor 101 allows the operator to define specific ranges, default values and mandatory fields. Typically, the opertor would do this to match the constraints of the application. As an example, in a template for broadcast TV channels, there might be a status field which can take one of the enumerated values: 'ONLINE', OFFLINE' or 'HIDDEN'. Should a variant IPTV middleware / application be used that also requires a new enumerated value (e.g. 'STANDBY'), then this new value can be added to the corresponding List Of Values using the user interface of editor 101.

It is noted that it is possible for the type in a metadata template to reference another object including other metadata template instances. These can be selected for instance using a drop down list in the user interface of editor 101 in the same way as for a List Of Values.

It is further noted that default metadata templates may be supplied with the content and distribution management system according to the current invention.

Secondly, agents 121, 122, 123, 12N compartmentalise the device specific interface logic as "pluggable" modules with a well defined interface into the rest of the system.

These agents 121, 122, 123, 12N allow the content and distribution manager to be deployed against different downstream devices or headend devices, represented in Fig. 1 by the application server 131, the video server 132, the transcoder 133 and headend device 13N which might for instance be an encryption device. The agents 121, 122, 123 and 12N provide the mapping between the common internals of the content and distribution management system and the specific headend device where it is connected to. An agent supports a common interface defining a set of commands and applies them to the headend device. Hence these agents can be written or modified by deployment engineers without changing the core code of the content and distribution manager.

All agents in the VoD/NVoD content and distribution management system drawn in Fig. 1 support for instance the following 7 commands:
- the "Initialise" command to set any agent wide parameters and create any background jobs;
- the "Input" command that is called when receiving a new item such that the agent has an opportunity to initialise it's own data structures and to bind itself correctly into the workflow for the particular data set;
- the "Load" command that is called to initiate an action such as loading metadata into the operation and maintenance platform or starting an asset transfer to a media server like 132;
- the "Update" command that is called to modify an existing element once it has started, like for instance the updating of metadata already loaded into the operation and maintenance platform for a VoD event;
- the "Unload" command that is called when the corresponding element is finished, like for instance when a VoD event has finished and the assets need to be deleted from the video server 132;
- the "Abort" command that is called to finish an element early, like for example to delete a VoD event before the intended contract end time; and
- the "Tidy" command that is called to remove any internal data for an item.

Thirdly, an extensible data representation, XML in the system drawn in Fig. 1, allows device specific data to be transported to the relevant agents with the core system to have understanding about the device specific data. The distribution to the appropriate agents is done by input 141 of the stager or distribution manager 102.

Thus, XML is used as extensible representation of metadata exchanged between the content manager and distribution manager in Fig. 1. When an item is published in the content manager, the publishers use the metadata template definitions to generate the extensible representation. There is no need to recode the publishers in the content manager. Also, the XML representation is passed uninterpreted by input 141 to the relevant agent, i.e. 121, 122, 123 or 12N, again not requiring any coding changes to interfaces of intemals of the distribution manager. Only the agents 121, 122, 123 and 12N will need to be modified (which has to be done anyway to make them talk to the headend devices 131, 132, 133 and 13N respectively) to parse this extensible representation.

Fourthly and lastly, a configurable workflow 151 allows dependencies between individual device specific elements to be sequenced without changing the core implementation.

Any published event, e.g. VoD event or NVoD event in Fig. 1, maps to a set of individual elements. Each element performs a specific task such as loading metadata, unloading an asset, encrypting an asset, etc. An element has to be performed by a certain time and cannot start before a specific time or before dependent elements have completed. The distribution manager is supplied with a default workflow 151 relating the elements together. This workflow 151 can be altered by changing the rules for ordering and by introducing new element types.

The workflow 151 defines both the load order and dependencies of elements, as well as the unload order. This is important to ensure the correct termination of an event, for example to ensure a VoD event is unpublished in the IPTV application before the corresponding assets or images are deleted.

It is noted that the workflow 151 also performs error handling and reporting including the ability to correct the workflow 151. For example, if an asset transfer fails in a VoD item due to for instance a corrupted media file, the operator can correct it and can update the VoD item by just restating the media file. The workflow 151 will automatically recover from the failed point.

It is further noted that the workflow 151 also automatically tries to correct some expected faults. For example, if there is a failure in sending a media file to one of the media servers, it will automatically retry the transfer before reporting the failure.

Although the present invention has been illustrated by reference to a specific embodiment, i.e. the VoD/NVoD content and distribution management system illustrated by Fig. 1, it will be apparent to those skilled in the art that various changes and modifications may be made within the spirit and scope of the invention. It is therefore contemplated to cover any and all modifications, variations or equivalents that fall within the spirit and scope of the basic underlying principles disclosed and claimed in this patent application. For example the concepts of the configuration tool according to the invention, although described in the context of a television content and distribution management system, are more widely applicable then to content and distribution management of just VoD and NVoD assets.

## Claims

1. A configuration tool for a content and distribution management system for assets (111, 112), said configuration tool comprising:
a. an editor (101) for editing user-editable templates defining metadata (161, 162, 163; 171, 172, 173) of an asset (111; 112) used in said content and distribution management system through key/value pairs and lists of values;
b. a plurality of agents (121, 122, 123, 12N), each agent having headend device specific logic for transforming an internal asset format used in said content and distribution management system into a headend device specific asset format;
c. an extensible representation of metadata for uninterpreted transport of device specific assets to the appropriate agent (121; 122; 123; 12N); and
d. a configurable workflow (151) for defining the order and dependencies between elements of events handling said assets (111; 112) and/or metadata (161, 162, 163; 171, 172, 173).

2. A configuration tool according to claim 1,
**CHARACTERIZED IN THAT** said editor (101) comprises means to customize an existing template.

3. A configuration tool according to claim 1,
**CHARACTERIZED IN THAT** said editor (101) comprises means to define a new template.

4. A configuration tool according to claim 1,
**CHARACTERIZED IN THAT** said editor (101) comprises means to specify a key name and type for each entry in a template.

5. A configuration tool according to claim 4,
**CHARACTERIZED IN THAT** said editor (101) comprises means to specify a user-defined type for an entry in a template.

6. A configuration tool according to claim 1,
**CHARACTERIZED IN THAT** said agents (121, 122, 123, 12N) support the same set of commands for events handling said assets (111; 112) and/or metadata (161, 162, 163; 171, 172, 173).

7. A configuration tool according to claim 1,
**CHARACTERIZED IN THAT** said extensible representation of metadata corresponds to an extensible syntax such as XML.

8. A configuration tool according to claim 1,
**CHARACTERIZED IN THAT** said elements correspond to specific tasks for handling an asset(111; 112) and/or its metadata (161, 162, 163; 171, 172, 173).

9. A configuration tool according to claim 1,
**CHARACTERIZED IN THAT** said workflow (151) defines load order and unload order of said elements and dependencies between said elements.

10. A configuration tool according to claim 1,
**CHARACTERIZED IN THAT** said workflow (151) defines error handling and reporting.

11. A configuration tool according to claim 1,
**CHARACTERIZED IN THAT** said workflow (151) defines automated correction of expected errors.

12. A configuration tool according to claim 1,
**CHARACTERIZED IN THAT** said content and distribution management system is a video content and distribution management system for video-on-demand (111) and near-video-on-demand assets (112).

13. A configuration tool according to claim 12,
**CHARACTERIZED IN THAT** headend devices (103) in said system correspond to application servers (131), video servers (132) or transcoders (133).
